# EUROPEAN PATENT APPLICATION

(11) **EP 1 321 109 A1**
(43) Date of publication of application: **25.06.2003**
(21) Application number: 01830776.9
(22) Date of filing: 18.12.2001
(51) Int. Cl.: A61C 8/00

(54) **Dental implant system with implant having a head with inclined walls**

(71) Applicant: Tizzoni, Riccardo, 20122 Milano (IT)
(72) Inventor: Tizzoni, Riccardo, 20122 Milano (IT)
(74) Representative: Petruzziello, Aldo

(57) **Abstract**

A dental system for dental prostheses comprises at least one implant to be installed inside a preformed hole in the bone of the maxilla or mandible, in a partially or totally edentulous patient, and an abutment engageable with the implant and intended to be used as a support and anchor for a prosthetic tooth. The implant comprises a body part and a head with engagement means for the abutment, said head (14) of the implant (10) is defined in part by inclined surfaces (s1, s2) disposed at opposite sides of a plane passing through the axis (a) of the implant and diverging in a direction from the end of the head of the implant towards the opposite end thereof, there further being defined in said head engagement means (15) for the abutment disposed in positions diametrically opposite the top of said inclined surfaces.

## Description

The present invention refers to the field of dental implantology.

The practice of installing a fixed dental prosthesis in a totally or partially edentulous patient through the use of a so-called dental implant "system" is widespread. The dental implant system comprises a so-called "implant" or implant body, an abutment that can be applied to the implant, possibly a screw to fasten the abutment to the implant, a prosthesis element and possibly other equipment to perform installation of the implant body in the bone, healing thereof and healing of the gum. The implant is installed in a special hole previously made in the bone of the maxilla or mandible (the hole can be tapped previously to have a thread matching an outer thread of the implant, or the implant can be self-tapping or smooth and cylindrical) and then left to rest for the time necessary for integration thereof into the bone. In a second surgical step a healing screw is installed, after the implant has been uncovered from the gum, and subsequently an abutment is applied to the implant, generally by direct screwing or by means of a fixing screw, and a prosthetic tooth is applied or constructed on the abutment.

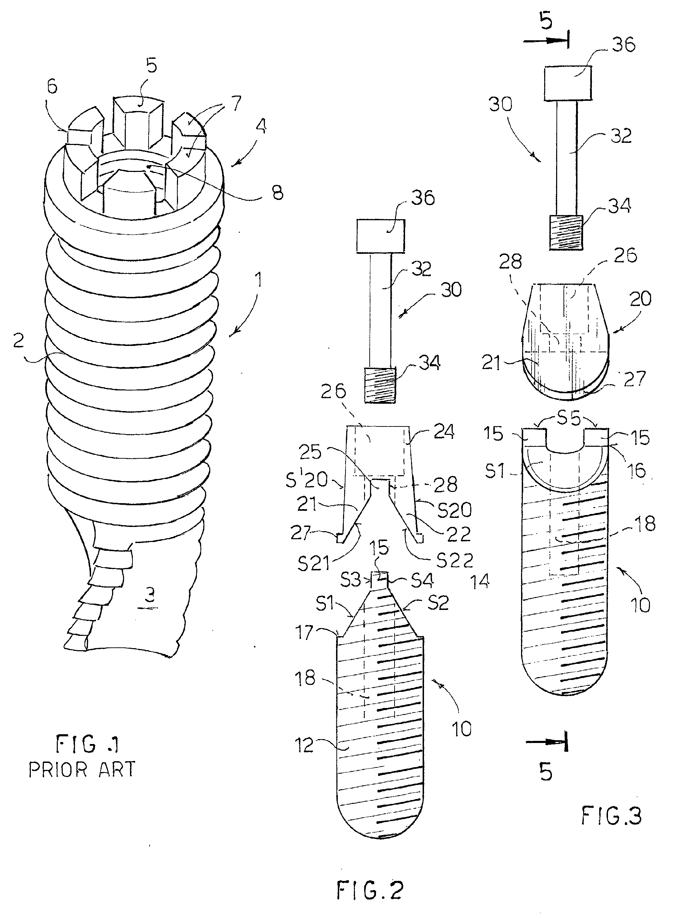

A variety of implants designed according to different requirements and a variety of abutments are known to the art. In all prior art implants the head, that is the subgingival implant portion designed to engage the prosthetic abutment, has a substantially flat shape or in any case is defined by a flat surface substantially at right angles to the longitudinal axis of the implant. An example of such an implant is illustrated in Figure 1.

A drawback that is encountered with the use of flat-headed implants is that at the sides, that is at the interproximal surfaces of the prosthetic tooth, the so-called "gingival papilla" is lost. This is the substantially triangular anatomical structure present in the interproximal spaces of teeth not affected by paradontal pathology or by positioning defects and the presence of which is related to a perfectly aesthetic appearance of the smile; its presence is fundamental particularly in the upper front sector.

Attempts have been made to overcome said drawback with the aid of an increased thickness of the gum suitably and gradually compressed by temporary dental elements and then by a permanent element, so as to form a scalloped gum pattern. The solution has drawbacks, however, in that there are different pocket or gingival groove depths around the prosthetic tooth. This means that as the depth of the groove increases, the premise is created for bacterial stagnation ("periimplantitis"). The papilla formed according to said method might also be destined to flatten over time because it is not supported by bone.

An object of the present invention is to overcome the drawbacks of the prior art and, in particular, to solve the problem of forming a gingival papilla as similar as possible to the natural papilla, that is durable and that does not present higher risks than the natural papilla.

The object has been achieved with a system as set forth in claim 1. Further new and advantageous characteristics are stated in the subsequent claims.

In other words, the new implant system comprises an implant wherein the head has two opposite inclined surfaces that diverge from a distal abutment-engaging portion. An abutment for cooperation with the implant has a base shape matching that of the implant and is fastened to the implant by means of a retaining screw.

The installation equipment for installing the implant comprises a so-called screwing device or cuff, with a shape matching the shape of the head of the implant and provided with an engagement seat for a wrench; and an automatic or manual wrench whose working part is shaped to engage said seat of the cuff. The system further comprises a screw-cover assembly and a healing screw, with a particular shape. The system further comprises a laboratory analog of the same shape with a head tapered substantially along two inclined planes, like the implant, and an impression post with a corresponding shape.

The new implant system achieves the aforementioned object. In particular, it obtains a gingival papilla similar to the natural one, supported by bone tissue and therefore lasting over time. Moreover it is simple to make and to install. More particularly the shape characteristics of the implant and of the prosthetic parts are considered to ensure the possibility of formation and maintenance over time of the gingival papilla. The creation of the papilla is ensured by modelling around the implant of the supporting bone tissue, which thus respects the anatomical shapes and becomes physiologically "active" to provide for normal trophism and support of the gingival papilla in order to keep it stable over time. Lastly, the loads of said shape on the implant body provide for physiological bone remodelling, preventing resorption of the papilla and consequent re-flattening thereof.

An embodiment of the system and the relative installation equipment will be described below, purely by way of non-limiting illustration, with reference to the figures, in which:
Figure1 is a perspective, enlarged view showing an exemplary embodiment of an implant according to the state of the art.
Figure 2 is an enlarged, exploded side view illustrating a system according to this invention comprising an implant and the relative abutment; a retaining screw is shown drawn with a dashed line;
Figure 3 is a front view illustrating the same elements as the preceding figure;
Figure 4 is top plan view of the implant of Figures 2 and 3;
Figure 5 is an axial sectional view along the plane indicated by 5-5 in Figure 3, of the implant with the abutment and the retaining screw applied; a prosthetic tooth is drawn with a dashed line;
Figure 5A is a front view of the implant of Figure 5;
Figure 6 is a side view of a laboratory analog which is part of the system of the invention;
Figure 7 is a front view of the laboratory analog of Figure 6;
Figure 8 is a side view of the impression post of the system, with a screw drawn with a dashed line;
Figure 9 is a plan view of the impression post;
Figure 10 is a side view of a drill-mounted wrench with the relative screwing accessory;
Figure 11 is a side view of a manual wrench with the relative screwing accessory;
Figure 12 is a side view of the implant with a screw-cover assembly (dashed line) and relative accessory;
Figure 13 is a side view of the implant with a healing screw and relative accessory.

A prior art implant or implant body illustrated in Figure 1 is designated as a whole with reference numeral 1. It comprises an externally threaded proximal portion 2, possibly with helicoidal grooves 3 at the proximal end, and a distal engagement head 4 for an abutment, not shown. The head 4 has a plurality of spaced engagement parts 5, disposed in a circle around a blind threaded hole 8, said parts defined by a substantially cylindrical side surface 6 and by a substantially flat end surface 7 at right angles to the longitudinal axis of the implant body.

An implant body of the system of the invention will be described below with reference to Figures 2-5. Said implant body or implant is referenced 10 as a whole and comprises a proximal part 12 and a distal head 14.

The proximal part can have any per se known shape, for example it can be smooth and cylindrical or externally threaded (as shown) or of another shape, with any suitable thread, with or without helicoidal grooves; purely indicatively a part spherical shape has been illustrated.

The head 14 is defined, as well as by the cylindrical surface 16 of the proximal part, also by two inclined surfaces s1, s2, which converge towards a distal position, and has two engagement portions 15, 15, shown at the top in the figures. In the embodiment of the figures, the surfaces s1 and s2 are symmetrical with respect to an axial plane at right angles to the sheet of Figure 2. The surfaces s1, s2 define, in a front view and in a rear view, a semicircular "scalloped" figure. The angle of inclination of the surfaces s1 and s2 with respect to an axial plane can vary from about 30° to 50°. The outer thread also extends to the head, possibly excluding the ends of the engagement parts.

In the embodiment of the figures, the engagement parts 15 are preferably defined by surfaces s3, s4, parallel to the aforementioned axial plane and by a flat or curved upper surface s5, and are situated in opposite positions around a blind threaded hole 18. The surface of the implant is preferably of commercially pure titanium and may or may not be coated with hydroxylapatite, or worked or treated in any manner per se known to the art.

An abutment of the system according to the invention is denoted as a whole with reference numeral 20. It comprises two abutment legs 21, 22, and an abutment body, 24. The legs 21, 22 have inclined inner surfaces s21 and s22, and define between them a shape substantially corresponding to the shape of the head portion of the implant defined by the surfaces s1, s2. In a front view the legs are shaped with a rounded profile, with a projecting edge 27 on part of the circumference. The abutment body has a housing 26 for the head of a retaining screw and a through hole 28 for the retaining screw.

The retaining screw, per se known, is referenced 30 and comprises a shank 32 with a threaded foot 34 and a widened head 36 of such a diameter as to be able to be received inside the housing or seat 26.

It should be noted that while in the assembled device the holes 18, 28 and the housing 26 must necessarily be disposed along the same axis a, the front s20 and rear s'20 surfaces of the abutment can be made with a certain freedom of form and inclination, for example for adaptation to various shapes of prosthetic teeth.

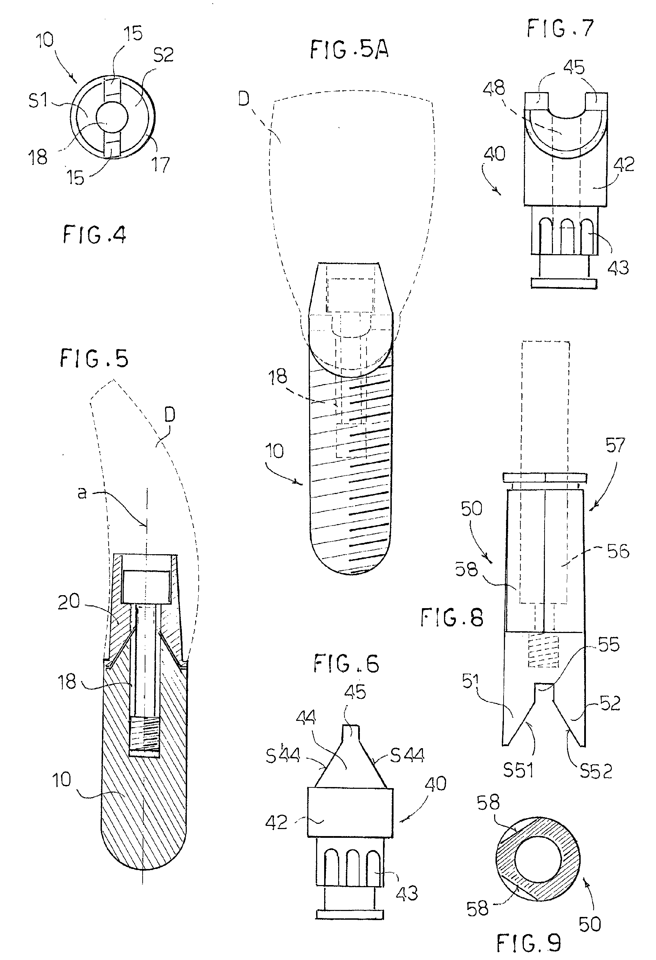

A prosthetic tooth D is installed on the abutment previously assembled on the implant body and is drawn with a dashed line in figures 5 and 5A.

The system according to the invention can further comprise the elements necessary to take the impression and make the prosthesis, such as a so-called "laboratory analog", illustrated in Figures 6 and 7, and an impression post, as illustrated in Figures 8 and 9.

The laboratory analog is indicated as a whole with reference numeral 40 and comprises a substantially conventional body 42 with a tang 43, a head 44 defined by opposite inclined walls s44 and s'44, engagement parts 45 and a threaded hole 48. The parts 44, 45 and 48 substantially correspond in function and shape to the parts 14, 15 and 18 of the above described implant and therefore will not be described in greater detail.

The impression post is designated as a whole with reference numeral 50, and comprises two legs 51 and 52 defined by facing inclined walls s51 and s52, and by a groove 55, respectively corresponding in shape to the surfaces s44 and s'44 and to the engagements 45 of the laboratory analog. It further comprises a through hole 56 for the conventional screw V40. A head 57 of the impression post has, in the conventional manner, tapered walls 58 which act as reference positions for the exact positioning in the impression.

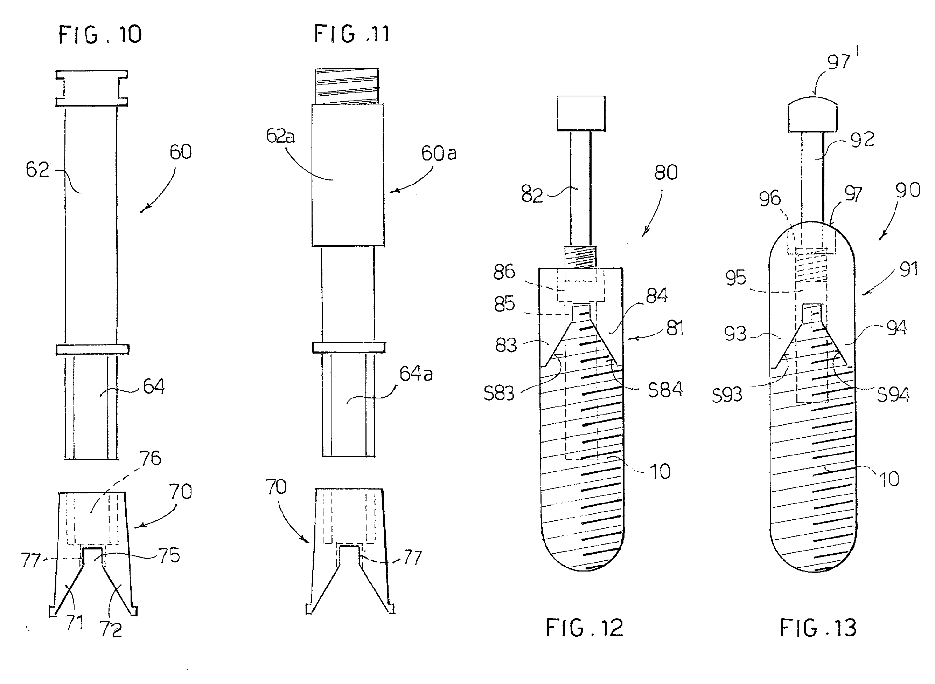

The invention provides wrenches and screwing auxiliary devices illustrated in Figures 10 and 11 to screw the implant into place in the bone. In said figures the screwing auxiliary devices are identical and therefore are denoted by the same reference numerals and are described only with reference to Figure 10. The wrenches of the two figures differ only in the shank part, one being intended for drill-mounted use (Figure 10) and the other for manual application (Figure 11).

The wrench 60 therefore comprises a per se known shank 62, suitable for installation on a dental drill, and a tang 64 coaxial to the shank and having a hexagonal cross section or in any case a cross sectional shape fit to allow a torque transmitting engagement.

The wrench 60a for manual use has a shank 62a with an enlarged part to be engaged in a hand ratchet spanner which can rotate in a clockwise and anticlockwise direction and a tang 64a coaxial with the stem and having a hexagonal cross section or in any case a cross sectional shape able to allow a torque transmitting engagement, like the tang 64.

The screwing auxiliary device 70 is shaped with two legs 71, 72, defined by facing inclined surfaces and by a groove, in a similar manner to the engagement portion of the implant head 14. It further has a hole 76, which is a hexagonal in plan view or in any case has a shape fit to allow a torque transmitting coupling and suitable to be coupled with the tang 64, 64a respectively. It has a second through hole 77 inside the first which serves to allow passage of a screw which holds together the implant and the screwing device (so that it can be inserted into the bone).

A cover-screw assembly of the system is illustrated in Figure 12 in collaboration with the implant 10 and is denoted by reference numeral 80.

The assembly 80 comprises a cover or cap device 81 and a retaining screw 82. The stopper device has a pair of legs 83, 84, with facing inclined surfaces S83, S84 converging in a manner corresponding to the surfaces S1, S2 of the implant 10. It further has a through hole 85 for the retaining screw and a housing 86 for the head thereof.

A healing screw assembly of the system is illustrated in Figure 13, in collaboration with an implant 10, and is denoted with reference numeral 90. The assembly 90 comprises a healing device 91 and a retaining screw 92. The healing device 91 is shaped with two legs 93, 94 with two converging inclined surfaces S93, S94, substantially corresponding to the surfaces S1, S2 of the implant, a through hole 95 for the screw, a housing 96 for the screw head, and a rounded upper surface 97. The retaining screw 92 also has a rounded upper surface 97'.

## Claims

1. A dental system for dental prostheses, comprising at least an implant for installation inside a hole previously formed in the bone of the maxilla or of the mandible, in a partially or totally edentulous patient, and an abutment that can engage with the implant and is designed to serve as a support and anchor for a prosthetic tooth, said implant comprising a body part and a head with engagement means for the abutment, **characterised in that** said head (14) of the implant (10) is defined in part by inclined surfaces (s1, s2) disposed on opposite sides of a plane passing through the axis (a) of the implant and diverging in direction from the head end of the implant towards the opposite end thereof, there being further defined in the head of the implant engagement means (15) for the abutment disposed in diametrically opposite positions at the top of said inclined surfaces.

2. A dental system according to claim 2, **characterized in that** the abutment (20) is shaped with two legs (21, 22) when seen in profile, the two legs being defined by facing inclined surfaces (s21, s22) substantially corresponding to said inclined surfaces of the implant.

3. A dental system according to claim 1, **characterized in that** the engagement means (15) for the implant are defined between surfaces parallel to each other and parallel to the axis of the implant.

4. A system according to claim 1 wherein the body part (12) of the implant has one or more of the following details: with or without an external thread, threaded or unthreaded internal engagement hole (18), and in which the implant is preferably of titanium with or without hydroxylapatite coating, or another surface treatment, cylindrical, threaded or unthreaded or self-threading or in another form.

5. A system according to claim 2 wherein the abutment has a housing (26) for the head of a retaining screw (30) and through hole (28) for said screw.

6. A system according to claim 2 wherein said legs have an externally raised edge (27).

7. A system according to claim 1 **characterized in that** the implant has a scalloped abutment surface (17) around part of said flat surfaces.

8. A system according to claim 1 **characterized in that** the angle between said diverging surfaces is about 30°-50°.

9. A system according to claim 1 or 2, **characterized in that** it further comprises a laboratory analog (40) with a head partially defined by surfaces at an angle to each other substantially as stated with reference to the implant.

10. A system according to claim 9 **characterized in that** it further comprises an impression post (50) shaped with two legs (51, 52) defined in part by surfaces at an angle to each other corresponding to the surfaces at an angle of the laboratory analog.

11. A system according to claim 1, **characterized in that** it further comprises a drill-mounted wrench (60) (Figure 10) or a manual wrench (60a) (Figure 11) and a screwing device (70), the wrench having a tang (64, 64a) of a suitable shape to transmit rotation and the screwing device having a shape with legs with surfaces at an angle to each other substantially correlated to the shape of the implant head and joined thereto by means of a through screw.

12. A dental system according to claim 1, **characterized in that** it further comprises a cover-screw assembly (80), said assembly comprising a cap or cover device (81) and a retaining screw (82), the cover device having a pair of legs (83, 84) with inclined facing surfaces (S83, S84) converging in a manner corresponding to the surfaces (S1, S2) of said implant (10) or head (14).

13. A dental system according to claim 1, **characterized in that** it further comprises a healing screw assembly, which includes a healing device (91) and a retaining screw (92), the healing device comprising a shape with two legs (93, 94) with inclined surfaces (S93, S94) substantially corresponding to the inclined surfaces (S1, S2) of said implant (10) or head (14).
